# EUROPEAN PATENT APPLICATION

(11) **EP 2 896 582 A1**
(43) Date of publication of application: **22.07.2015**
(21) Application number: 15157552.9
(22) Date of filing: 10.06.2011
(51) Int. Cl.: B65G 1/04, B66C 9/10, B66F 9/07, B66F 9/14, B66F 9/075, B65G 1/06

(54) **Transelevator for handling pallets, and goods storage system**

(30) Priority: 29.06.2010 ES 201031005
(62) Divisional of application: 11800217.9
(71) Applicant: Mecalux, S.A., E-08940 Barcelona (ES)
(72) Inventor: Forés Ràfols, Albert, 08940 BARCELONA (ES)
(74) Representative: Isern-Jara, Nuria

(57) **Abstract**

The invention relates to a transelevator (1) for handling pallets, suitable for use in a system for storing goods or similar, said translevator comprising a lower mobile frame (2) fixedly supporting a vertical lifting column (3) along which a pallet-removal device can move. The invention also relates to a pallet removal device for a transelevator, comprising: a lifting frame (20) provided with lifting wheels which travel along the length of guide means; a laterally mobile fixed frame (21); and a mobile carriage (22) capable of mobile in relation to the fixed frame (21) and including a fork (23) which can be moved laterally along axis Z by means of a lateral movement shaft (29) actuated by motor means and which can be rotated in plane X-Z by means of a rotation shaft (44) actuated by motor means.

## Description

### DESCRIPTIVE MEMORY

### OBJECT OF THE INVENTION

The object of the invention patent application herein is to register a transelevator provided with such a device that incorporates significant innovations and advantages.

More specifically, the invention relates to a transelevator suitable for handling pallets in a storage facility known as "automated warehouses" and also a goods storage system provided with the transelevator described according to claims 1 to 8.

### BACKGROUND OF THE INVENTION

Transelevators are machines that carry out operations related to storage at height and longitudinally along narrow aisles in storage facilities in a completely automated manner without an operator, such that significant functional benefits are provided, such as those related to speed, load heights and operational autonomy.

These transelevators typically comprise a pallet-removal device which travels vertically along the length of a lifting column, said device being provided with a fork for picking up and unloading the pallets to be handled, which move only in a lateral direction, therefore the load cannot be delivered and picked up frontally.

On the other hand, one drawback encountered in the transelevators known in the prior art is the provision of guide means located at the top of the vertical lifting column involving an additional structure and consequently a higher investment and maintenance cost in respect of the transelevator and the storage facility.

Furthermore, the applicant is not aware of the existence of a transelevator and a pallet-removal device having all the characteristics described in this memory.

### DESCRIPTION OF THE INVENTION

The invention herein has been developed with the aim of providing a transelevator that resolves the aforementioned drawbacks, further providing other additional advantages that will be apparent from the description detailed hereinafter.

It is an object of the invention to provide a transelevator for handling pallets, comprising a lower mobile frame fixedly supporting a vertical lifting column, along which a pallet-removal device can move.

It is therefore a further object of this invention to provide a transelevator, comprising a lower mobile frame fixedly supporting a vertical lifting column along which a pallet-removal device can move and characterised in that the lower mobile frame comprises two parts joined together by an intermediate section, each part having sides provided with wheels for moving the lower mobile frame, and at least one wheel being a driving wheel driven by a geared motor, therefore devoid of guide means located on the vertical lift column.

Particular embodiments of the transelevator of the invention are described in dependent claims 2 to 8.

Thanks to these features, in operation it is not necessary the presence of an upper rail for moving a transelevator through a storage system. Accordingly, it is possible to decrease a mounting time to assemble said transelevator and reduce costs of maintenance as well with respect to known prior art. Besides, it is possible to reduce costs for mounting a storage installation since it is not necessary to strengthen a storage structure consisting of shelves arranged in the storage structure in order to absorb possible efforts.

Another advantage of this above mentioned transelevator is that it can be assembled in conventional storing facilities which use trilateral machines actuated by an operator so that this facility can be converted into a totally automatic system where operator is not required.

A further object of the invention herein is to provide a goods storage system characterised in that it comprises at least two rows of spaced shelves between which a transelevator travels according to any of the claims 1 to 8, at least one goods receipt point, at least one goods issue point and a safety perimeter fence that surrounds the above elements.

Other characteristics and advantages of the transelevator and system for storing goods will become apparent from the description of a preferred, although not exclusive embodiment, which is illustrated by way of non-limiting example in the drawings appended, in which:

### BRIEF DESCRIPTION OF THE DRAWINGS

Figure 1 .- Perspective view of a transelevator for handling pallets according to the invention herein;
Figure 2.- Perspective view of the lower mobile frame provided in the transelevator in figure 1;
Figure 3.- Perspective view of a lower mobile frame in which some parts have been sectioned;
Figure 4.- Perspective view of a pallet-removal device viewed from one side which is mounted in the transelevator of the invention;
Figure 5.- Perspective view of the pallet-removal device viewed from the opposite side to the view shown in figure 4;
Figure 6.- Section view of the pallet-removal device;

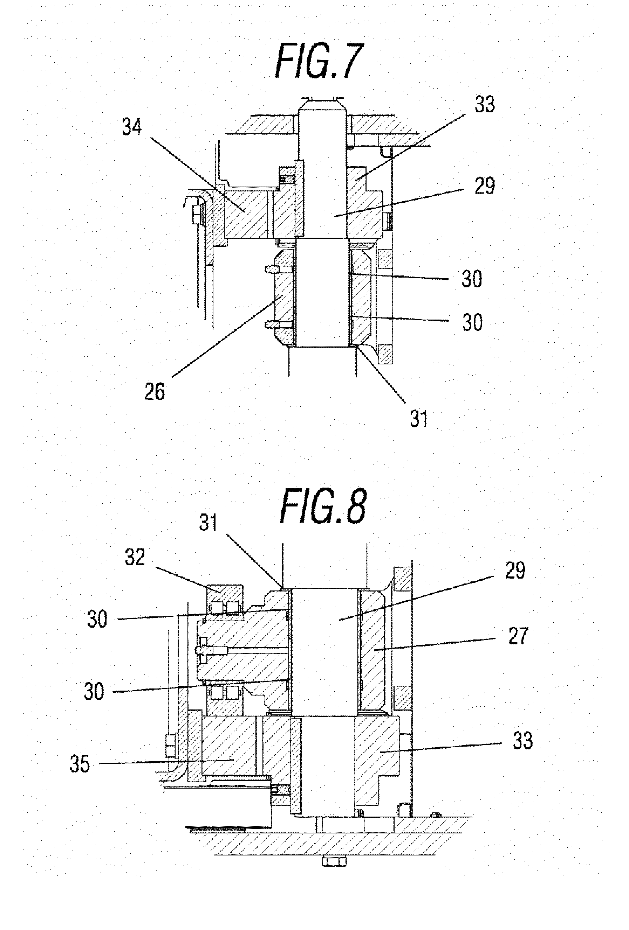

Figure 7.- Detailed and section view of an upper section of the pallet-removal device;
Figure 8.- Detailed and section view of a lower section of the pallet-removal device;

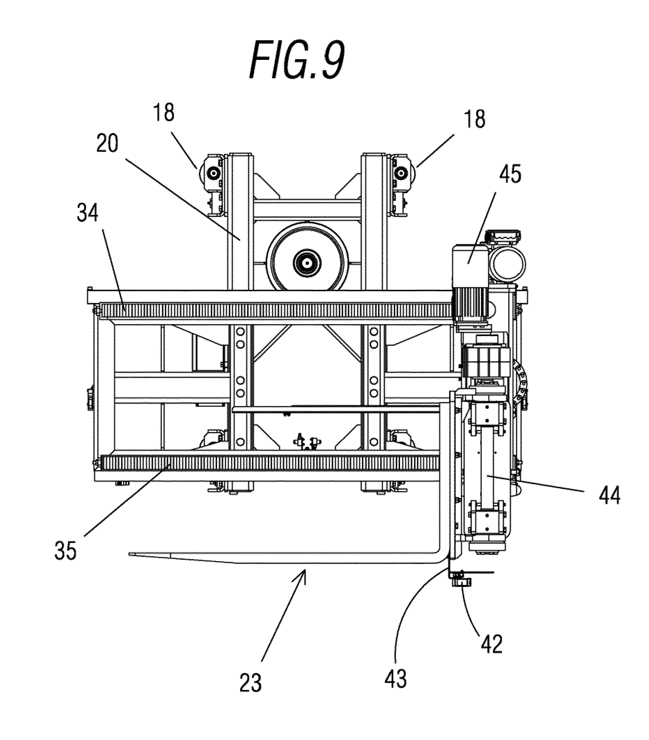

Figure 9.- Elevation view of the pallet-removal device;

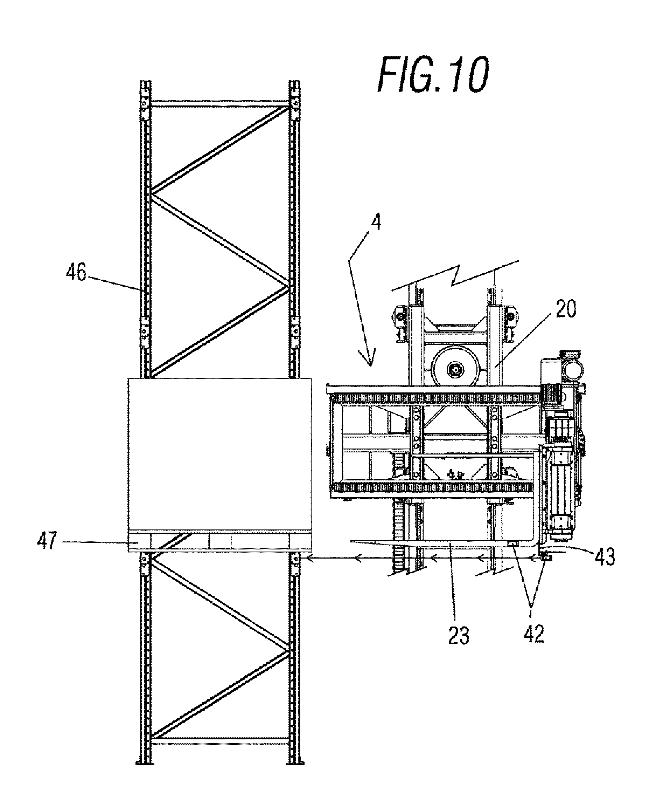

Figure 10.- Side elevation view of the removal device with a shelf cell where a pallet to be handled is housed;
Figure 11.- Perspective view of the stop device provided in the transelevator of the invention;
Figure 12.- Longitudinal sectional view of the stop device shown in figure 11;

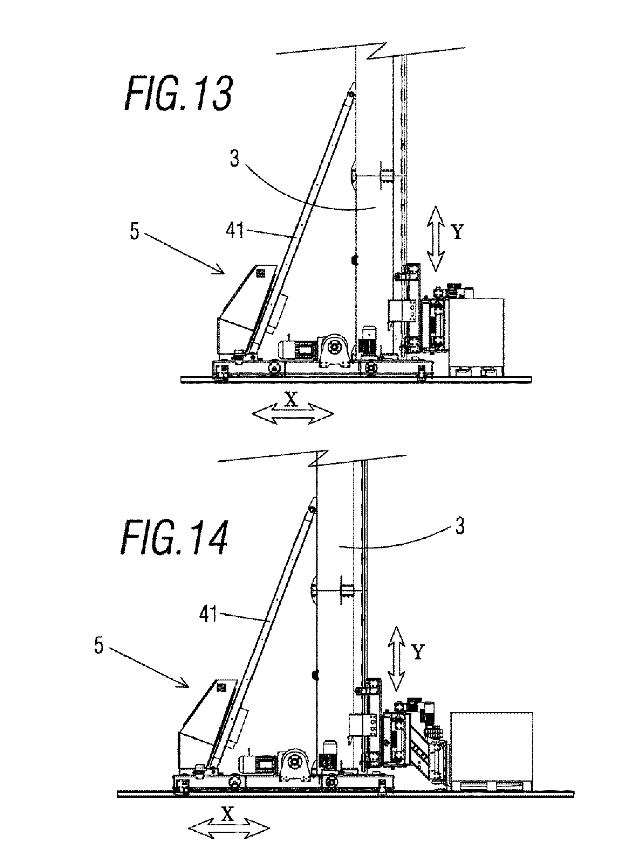

Figure 13.- Side elevation view of the transelevator showing the fork at ground level fork under operating conditions;
Figure 14.- Side elevation view of the transelevator showing a loading or unloading operation from the front.

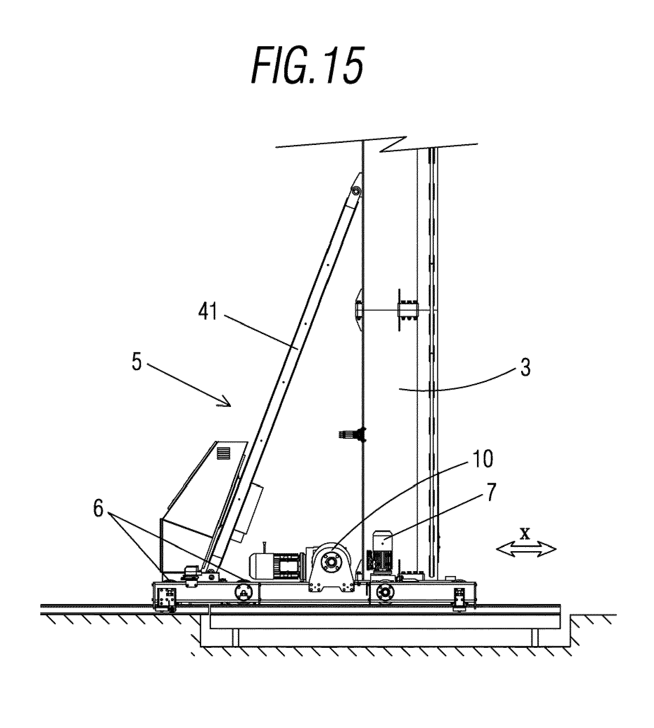

Figure 15.- Side elevation view of the transelevator moving onto a transfer system in direction X and on a fixed transfer rail at ground level;
Figure 16.- Perspective view of a part of a storage facility utilizing the transelevator according to this invention for handling goods on the shelves;

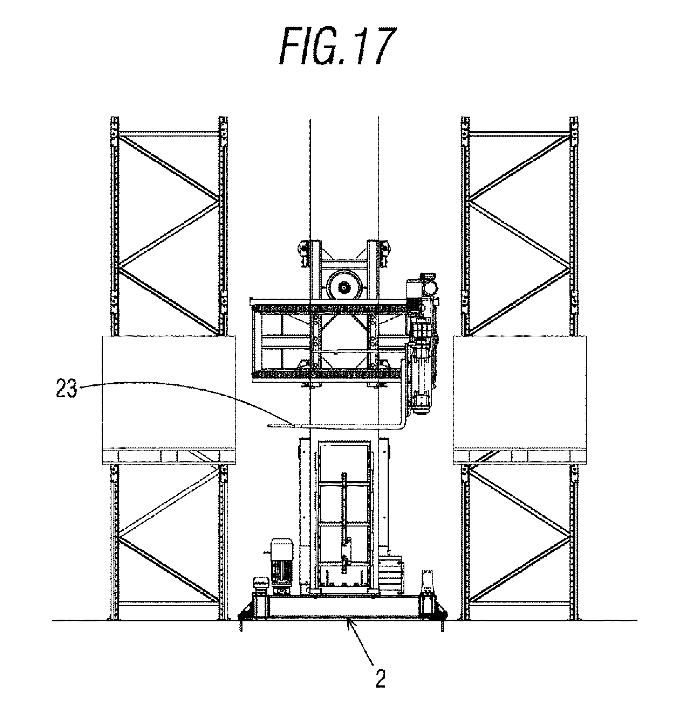

Figure 17.- Elevation view of a transelevator of the invention positioned between two columns of shelves under an operating condition in which the transelevator moves using guide rails located at ground level, and

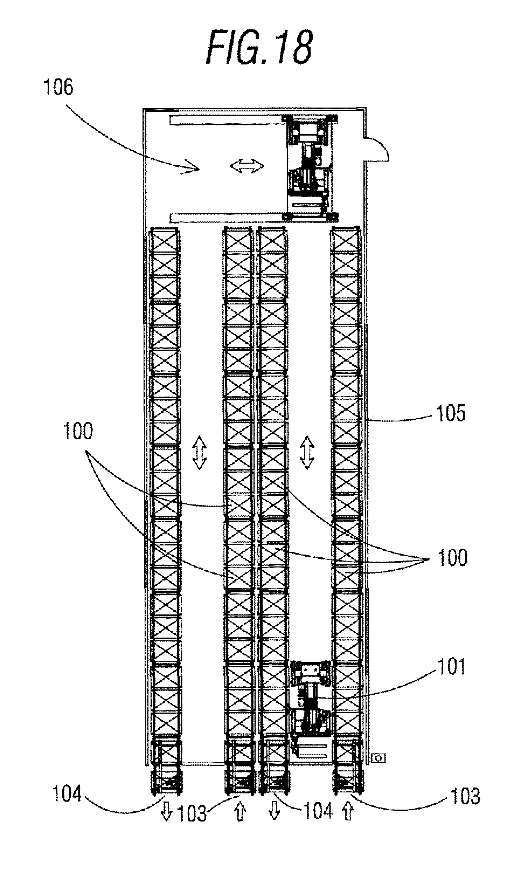

Figure 18.- Schematic plan view of a goods storage system according to the invention herein;

### DESCRIPTION OF A PREFERRED EMBODIMENT

A transelevator provided with a pallet-removal device according to the invention herein is described below.

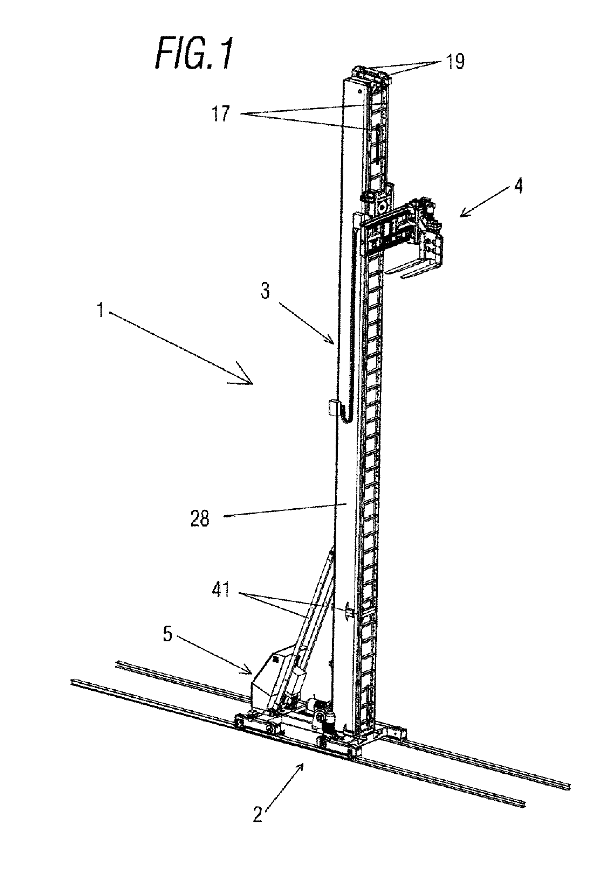

Firstly, and in reference to Figure 1, a transelevator is shown, generally indicated by reference 1 for handling pallets, said transelevator mainly comprising a lower mobile frame 2, a vertical lifting column 3 on which a pallet-removal device travels along for removing pallets indicated generally by reference 4 and a bracing structure 5.

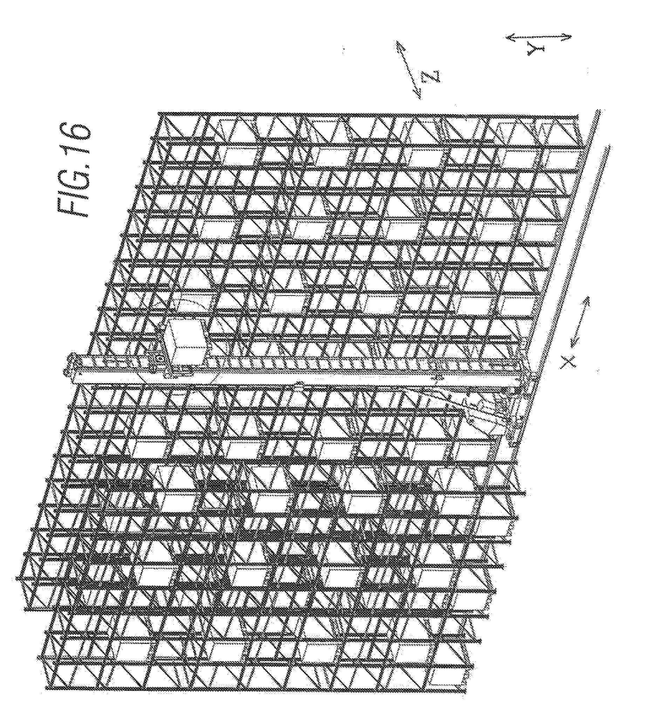

This transelevator 1 enables goods, that would normally be loaded on wooden pallets, to be placed onto and removed from the storage cells on shelves at different heights and along the aisles located between the shelving, as can be seen in the facility shown in Figure 16, where pallets can be put into place and removed from both sides of the aisle, having the ability to actuate on the three coordinate axes.

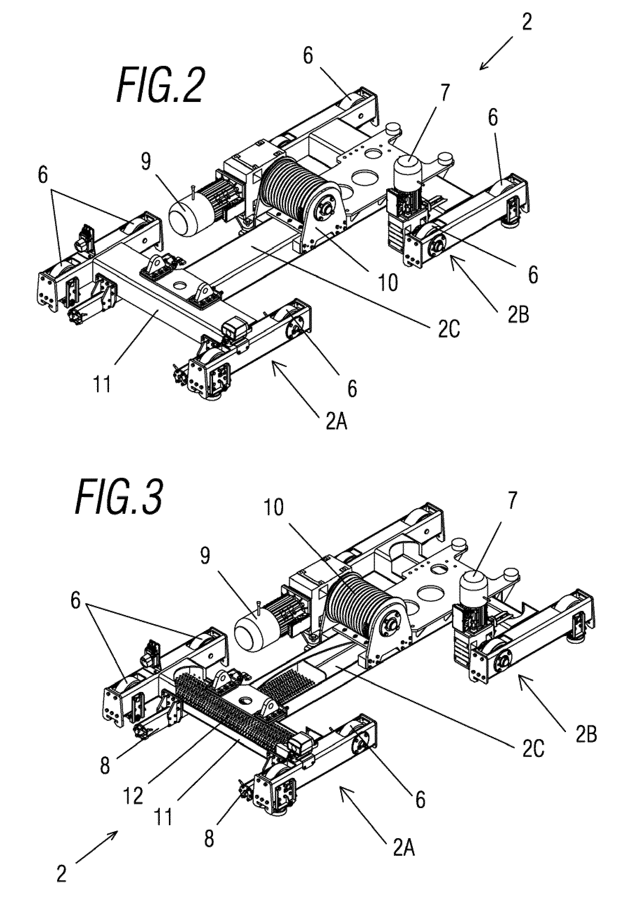

As can be seen in Figures 2 and 3, the lower mobile frame 2 comprises two parts 2A, 2B substantially H-shaped joined together by an intermediate section 2C, the sides of each of the parts having two wheels 6, making a total of eight wheels 6, one of the drive wheels being driven by a geared motor 7, therefore being advantageously devoid of a guide means on the vertical lifting column 3. There are also two stop devices 8 on the lower mobile frame 2, which will be detailed hereinbelow, which actuate in the event of colliding with the ends of the aisles on which the transelevator 1 travels, as well as the geared motor 7 activating translation on the X axis, the lifting drive system on the Y axis, which is principally formed by lifting geared motor 9 and a winding drum 10 on the lifting cable.

The use of four sets of two wheels 6, on the one hand, allows smaller wheels to be used and to better distribute the load and, on the other hand, in the case of a transfer operation on a double rail facilitates the option for the transelevator 1 to change aisle in Z direction, in a storage facility, by means of a known transfer system. By having sets of two wheels 6, the change from travelling in direction X on the transfer rails secured to the ground, to travelling on the rails on said transfer system is smoother, more stable and there is less danger of impacts or interference.

The profiles that form parts 2A, 2B of the lower mobile frame 2 are specially designed and calculated so their flexibility does not exceed the permissible limit that ensures the rigidity and stability of the transelevator 1, and at the same time for such flexibility to be sufficient for all transfer wheels to receive the proportional weight of the transelevator 1 corresponding to each of them according to the design and the centre of mass of said transelevator 1.

To maintain the stability of the transelevator assembly and to maintain the centre of gravity within the area between the eight wheels 6, a counterweight system is provided offsetting the off-centred weight of the load on the forks relative to the transelevator 1. This counterweight system consists of filling the hollow profiles 11 that form the lower mobile frame 2 structure with ferric material or scrap 12 left over from manufacturing processes, such as for example ferric waste from the process of punching the holes made on the various parts when manufacturing the transelevator 1. Thus, the counterweight system increases the weight in areas where it is required without increasing the outer volume of the transelevator 1, which facilitates the design, avoiding problems of interference with other elements in the transelevator 1.

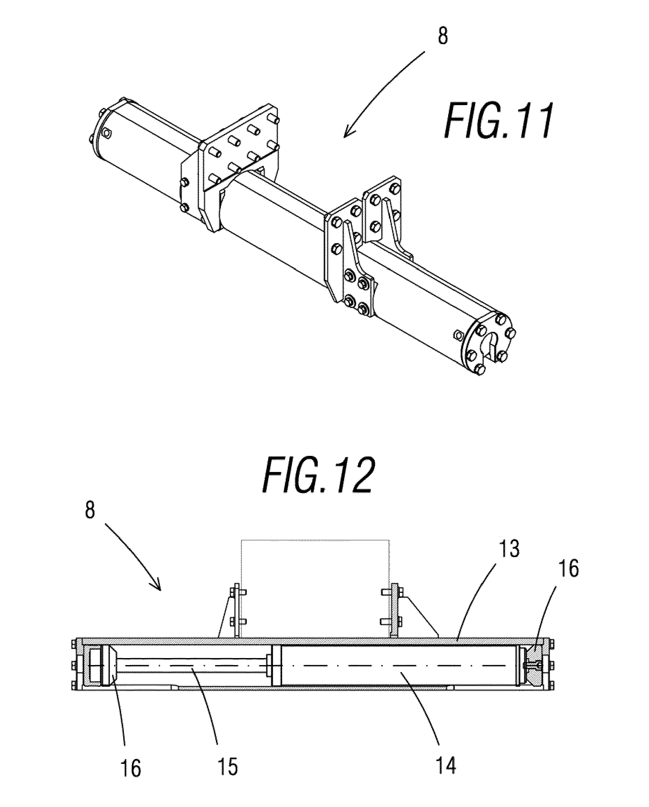

Additionally, hydraulic stop devices 8 are provided, each comprising an elongated hollow inner housing 13 secured to the lower mobile frame 2 by means of fixing elements, inside of which a hydraulic cylinder 14, said cylinder having a rod 15 connected to a sleeve, the free end of the rod 15 and the sleeve having two stop elements 16, such that the rod 15 and the cylinder sleeve 14 can be moved longitudinally along the housing when one of the stop elements 16 makes contact with an outer cylindrical bar, as can be seen more clearly in Figures 11 and 12.

The vertical lifting column 3 has a box-girder type structure 28 having the functions of the lift guide for the removal device 4 as well as withstanding the moments created as a result of the weight of the load carried on the fork and the movements of said fork for loading and unloading, and inserting and removing the load transported in the warehouse shelving cells. The box-girder forming the vertical lifting column 3 is bolted to the lower mobile frame 2. Furthermore, the lifting column incorporates vertical guides 17 allowing the lifting wheels 18 incorporated in the pallet-removal device 4 to roll and absorbing the forces transmitted by said lifting wheels 18 as a result of the moments due to both the cantilevered weight of the load transported and the movements in the horizontal plane of loading and removing said load into and from warehouse shelving cells. The aforementioned vertical guides 17 further include joints bolted to the lifting column. The fact that the joints on the box-girder and the guides are bolted greatly facilitates the design of the transelevator in modules that can be easily standardised, stored and transported.

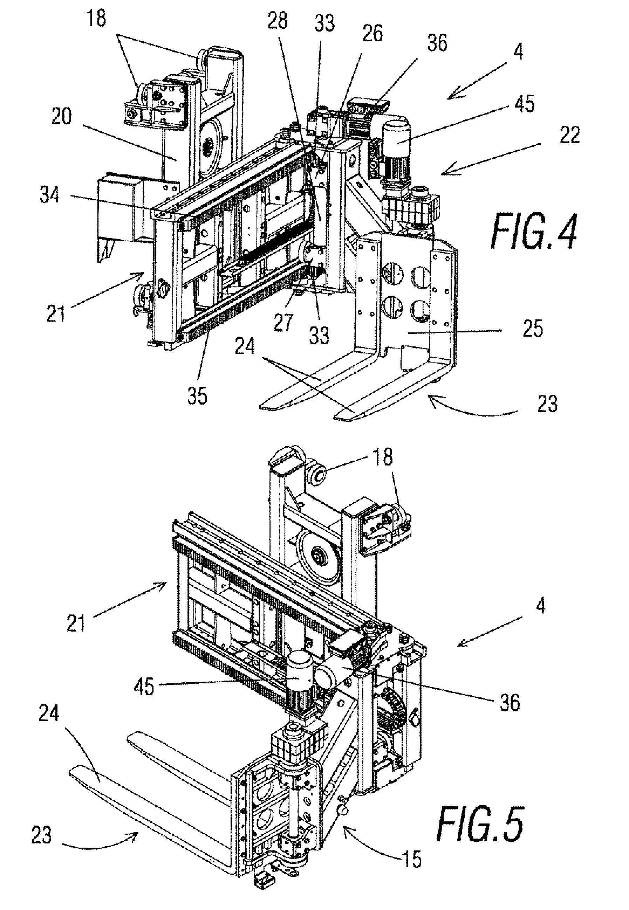

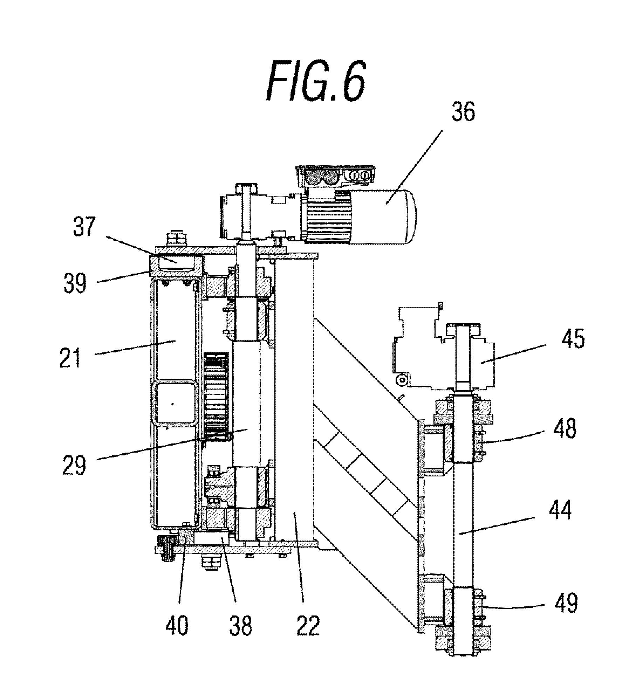

The pallet-removal device 4, shown in Figures 4 to 6, moves vertically on the Y axis through the vertical guides 17 by means of the lifting wheels. Said removal device 4 is suspended by the lifting cable that passes through the lifting pulleys 19 (see Figure 1) located at the upper end of the lifting column 3 and which is wound on the lifting drum 10 located on the lower mobile frame 2.

In general, the pallet-removal device 4 comprises a lifting frame 20 provided with lifting wheels 18, a laterally mobile fixed frame 21 and a mobile carriage 22 capable of movement in relation to the fixed frame 21 and including a fork 23 which can be moved laterally along axis Z and which, in turn, can be rotated by means of the rotation shaft and by means of the geared motor rotating the fork in the plane X-Z, for the purpose of loading and unloading operations in three positions. In other words, to the right, to the left of an aisle and frontally, and can rotate 180º.

The fork 23 used comprises two L-shaped blades 24 joined together by an intermediate body 25.

The mobile carriage 22 has two hinged bodies, upper 26 and lower 27, in which a lateral movement shaft 29 is housed, by means of hinged joints based on a combination of plain bearings 30 and friction discs 31 enabling the lateral movement shaft 29 to rotate inside. The lower hinged body 27 comprises a wheel 32 which rests on the profile of a lower rack, such contact between the wheel 32 and the profile transmitting the total weight of the fork 23 and the load transported from the mobile frame 22 to the lateral movement fixed frame of the fork. Near the two hinged bodies 26, 27 two laterally moving gears 33 can be seen, which, coupled to the lateral movement shaft 29 and meshed with the upper 34 and lower 35 racks, communicate lateral movement when the shaft rotates; rotation which, in turn, drives the laterally moving geared motor 36. The mobile carriage frame 22, has upper 37 and lower 38 guide wheels on its upper and lower ends for lateral movement, which together with the upper 39 and lower 40 guides ensure the lateral movement of the mobile carriage 22, and absorb the reaction force produced by the meshing between the racks 34, 35 and gears 33 to produce lateral movement as well as the tilting moment due to the cantilevered load on fork 23 and the weight thereof, ensuring the vertical stability of the mobile carriage in the X-Y plane. This arrangement utilises the lateral movement shaft for dual use: transmission of movement by means of the gears 33 coupled thereto, typically by means of pins and, at the same time, the shaft serves as a structural element where the mobile carriage connects, communicating the weight thereof to the fixed frame by means of the two upper and lower hinged bodies, which in turn are formed basically by friction elements which simplify and reduce the price of manufacturing. In addition to the two upper and lower gears 33 communicating the lateral movement of the mobile carriage 22, they ensure vertical stability in the Y-Z plane of the mobile carriage, preventing the latter from overturning on said plane. It should be mentioned the upper and lower guides are interchangeable and reversible. Since the guides only wear down, under normal conditions, on one of the two guiding surfaces, they are designed symmetrically and once an allowable limit of wear occurs, the guides can be removed, reversed, reassembled such that the opposite roller guide surface, which is not yet worn, is used.

To facilitate rotation of the fork 23 in respect of the mobile carriage 22, a rotation shaft 44 driven by a geared motor 45 located in the upper part thereof is provided. As further illustrated, the two ends of the rotation shaft are coupled to upper 48 and lower 49 hinged bodies.

As shown, the fork 23 is positioned at one end of the transelevator 1, outside the area occupied by the lower mobile frame 2 such that the fork 23 can be lowered, without interfering with the lower mobile frame 2, to the lower level required to load and unload pallets at ground level.

With reference to the bracing structure 5, it is formed by parallel bars 41 diagonally connecting the lifting column 3 with the rear of the lower mobile frame, the three elements forming a triangular structure in the X-Y plane ensuring the rigidity and stability of the transelevator 1 assembly.

For the purpose of compensating for the structural deformations of the transelevator and shelving 46 in the storage facility, a multi-detection system is provided, by means of a plurality of photoelectric sensors 42 incorporated in the pallet-removal device 4, in particular located on a plate 43 fixed to the intermediate body 25 situated between the two blades 24 of the fork 23, which detect the relative position of the shelving rail in different directions where the pallet 47 rests, in respect of the fork 23, and communicate this information to the control system ensuring the correct position of the fork in order to avoid impacts or force on the pallets.

Thus, inserting and removing the forks 23 in the pallets is ensured and inserting and removing pallets in the shelving cells without interference, absorbing deformation errors in shelving or defects in positioning pallets. The photoelectric sensors 42 utilised are distance meters and are located such that measurements are taken for both the vertical and horizontal distance to the nearest rail on which the pallet to be loaded should rest or where the pallet to be removed is supported.

In an alternative embodiment of the transelevator described, the lower mobile frame can be moved along the ground with the presence of lower lateral guide and anti-roll profiles, such that two profiles are installed in the transfer aisle of a storage facility which, by contrast with lower lateral guide wheels, ensure transfer along the aisle in a straight line, and in combination with specially positioned safety plates on the lower mobile frame, accidental tipping of the transelevator is avoided.

Finally, Figure 21 illustrates an embodiment of a goods storage system according to the invention herein, comprising four rows of spaced shelving 100 between which a transelevator 101, as described previously, travels in the direction indicated by means of arrows 102, a pair of goods receipt points 103, a pair of goods issue points 104 and a safety perimeter 105 surrounding the four rows 100 which may include internal access doors for maintenance, etc.

At one end of the storage system a transfer device has been further provided, generally indicated 106 having a movement mechanism in a direction perpendicular to the rows of shelving, such that the transelevator is transferred from one aisle to another. The transelevator 101 can thus cross from one aisle to another quickly and easily.

The details, shapes, dimensions and other accessory elements as well as the materials used in the manufacture of the transelevator of the invention may be conveniently replaced by others that are technically equivalent and do not depart from the essential nature of the invention or from the scope defined by the claims appended hereinafter.

## Claims

1. A transelevator (1) for handling pallets, said trans elevator comprising a lower mobile frame (2) fixedly supporting a vertical lifting column (3), along which a pallet-removal device is moveable, comprising said pallet-removal device a lifting frame provided with guide means to move along the length of the vertical lifting column (3) and a fork (23) supporting the pallets, in that the lower mobile frame (2) comprises two parts (2A, 2B) interconnected by an intermediate section(2C), each part having sides provided with wheels (6) for moving the lower mobile frame (2), and with at least one of the wheels (6) a driving wheel driven by a geared motor (7), therefore devoid of guide means located on the vertical lifting column (3) connected to a storage facility, **characterised by** the fact that the lower mobile frame (2) includes at least one hydraulic stop device (8) for stopping the lower mobile frame (2) from travelling along its path.

2. A transelevator (1) according to claim 1, **characterised by** the fact that the lower mobile frame(2) has a winding drum (10) in which the cable is located, which runs along the vertical lifting column (3) and is connected to the pallet-removal device.

3. A transelevator (1) according to claim 1, **characterised by** the fact that the wheels (6) are housed inside the hollow profiles that form the sides of both parts (2A, 2B).

4. A transelevator (1) according to claim 1, **characterised by** the fact that the hydraulic stop device (8) comprises an elongated hollow inner housing (13) secured to the lower mobile frame (2) by means of fixing elements, inside of which a hydraulic cylinder with a rod (15) is arranged and connected to a sleeve, the free end of the rod (15) and the sleeve having a stop element (16), such that the rod (15) and the sleeve can be moved longitudinally along the elongated housing (13) when one of the stop elements (16) makes contact with an outer cylindrical bar.

5. A transelevator (1) according to claim 1, **characterised by** the fact that the sides of each part of the lower mobile frame (2) comprise hollow inner profiles which can be filled with ferric material which acts as a counterweight system for the lower mobile frame (2).

6. A transelevator (1) according to claim 1, **characterised by** the fact that the intermediate section (2C) includes a hollow inner portion, which can be filled with ferric material which acts as a counterweight system for the lower mobile frame.

7. A transelevator (1) according to claim 1, **characterised by** the fact that the lifting column (3) is located at one end of the lower mobile frame (2), such that when the pallet-removal device is in a lowermost position, said fork (23) is flush with ground level.

8. A transelevator (1) according to claim 1, **characterised by** the fact that at least one of the ends of each of the sides of the two parts comprises safety plates provided with a substantially T-shaped groove that can be adapted to the profile of the guide rail on which the wheels travel.

9. A goods storage system **characterised by** the fact that it comprises at least two rows of spaced shelves (100) between which a transelevator travels (1, 101) according to any of the claims 1 to 8, at least one goods receipt point (103), at least one goods issue point (104) and a safety perimeter fence (105).

10. A system according to claim 9, **characterised by** the fact that a transfer device (106) is provided, said device having a mechanism that travels in a direction perpendicular to the rows of shelves, such that the transelevator (1, 101) is transferred from one aisle to another.
